# EUROPÄISCHE PATENTANMELDUNG

(11) **EP 2 952 545 A1**
(43) Veröffentlichungstag der Anmeldung: **09.12.2015**
(21) Anmeldenummer: 14171148.1
(22) Anmeldetag: 04.06.2014
(51) Int. Cl.: C09D 5/00, C09D 5/02, C08K 3/34, C08K 3/36, C09D 7/12

(54) **Reflektionsarme Farbzusammensetzung**

(71) Anmelder: STO SE & Co. KGaA, 79780 Stühlingen (DE)
(72) Erfinder: Weh, Walter, 78647 Trossingen (DE); Schaller, Christian, 73765 Neuhausen (DE); Weier, Andreas, 78647 Trossingen (DE); Gerlach, Günter, 78183 Hüfingen (DE)
(74) Vertreter: Gottschalk, Matthias

(57) **Zusammenfassung**

Die vorliegende Erfindung betrifft eine mehrphasige Farbzusammensetzung, enthaltend
a) eine Phase A) als Matrixphase, enthaltend
Wasser,
ein oder mehrere Schichtsilikate und
Bindemittel; und b) mindestens eine Phase B), welche in Phase A) dispergiert ist, enthaltend
Wasser,
Bindemittel und
Füllstoffe und/oder Pigmente,
wobei die mehrphasige Farbzusammensetzung eine Pigment-Volumen-Konzentration von 1 % bis 25% aufweist, sowie Verfahren zur Herstellung dieser mehrphasigen Farbzusammensetzung und Verwendungen derselben.

## Beschreibung

Die vorliegende Erfindung beschreibt eine mehrphasige, reflektionsarme Farbzusammensetzung, insbesondere geeignet für Außenflächen, vor allem verkehrsnahe Flächen, wie z.B. Tunnel, Brücken, Lärmschutzwände, Parkhäuser, etc., ein Verfahren zu deren Herstellung und die Verwendung der mehrphasigen Farbzusammensetzung als reflektionsarme Beschichtung.

Reflektionsarme Beschichtungen sind zum Beispiel bei vielen Verkehrsbauten vorgeschrieben, insbesondere im Tunnelbereich, um Blendung von Verkehrsteilnehmern zu vermeiden, aber auch andere Oberflächen, z.B. Brückenpfeiler können bei falscher Beschichtung Scheinwerferlicht o.ä. derart reflektieren, dass es zur Blendung von Verkehrsteilnehmern kommt.

Beispielsweise wird von der Bundesanstalt für Straßenwesen (BASt) der Bundesrepublik Deutschland verlangt, dass der Glanzgrad kleiner 60 (Glanzeinheiten, GU) sein muss (gemessen nach DIN EN ISO 28139), siehe "Zusätzliche Technische Vertragsbedingungen und Richtlinien für Ingenieurbauten - Teil 5 Tunnelbau - Abschnitt 1 Geschlossene Bauweise", Seite 28.

Helle, reflektionsarme Beschichtungen sind normalerweise matt, was häufig durch eine unregelmäßige Oberflächenstruktur erreicht wird. Das auftreffende Licht wird dann nur diffus gestreut, also nur ungerichtet reflektiert.

Eine dunkle, z.B. schwarze, Oberfläche würde ebenfalls nur geringe Mengen an Licht reflektieren. Dies ist jedoch häufig unerwünscht, da, z.B. in Tunneln, eine dunkle Oberfläche sich negativ auf die Beleuchtung des Tunnels auswirkt. Folglich sind helle, matte Oberflächen von Vorteil. Auch bei anderen Verkehrsbauten wären dunkle Oberflächen von Nachteil, da mögliche Hindernisse (vor allem nachts) schwer zu erkennen sind und somit z.B. bei Ausweichmanövern nicht rechtzeitig als Hindernisse erkannt werden können.

Eine helle aber dennoch matte Oberfläche wird häufig durch unebene Oberflächenstrukturen einer Farbbeschichtung erreicht. Hierzu werden i. d. R nichtglänzende Füllstoffe, die frei an der Oberfläche liegen, in großen Mengen zugegeben. Füllstoffe weisen jedoch häufig eine raue Oberfläche oder sogar Poren auf, weswegen an der Oberfläche frei liegende Füllstoffe gerne Schutzpartikel wie Ruß, Bremsstaub und Salzreste aufnehmen, ohne dass die Schmutzpartikel z. B. in Tunneln durch natürlichen Regen abgespült werden. Die Oberfläche verschmutzt folglich. Deswegen werden Tunnelwände in regelmäßigen Abständen mechanisch gereinigt. Dadurch können auf die Dauer die frei liegenden Füllstoffe aus dem Beschichtungsverbund heraus gebrochen werden, und die Mattigkeit geht verloren, weil die unebene Struktur an der Beschichtungsoberfläche zerstört wird. Auch bei anderen Flächen, die der Witterung ausgesetzt sind, ist oft eine Reinigung nötig (evtl. seltener als bei Tunnels) wobei eine derartige Reinigung und Regen ebenfalls zu den o.g. Problemen führen kann. In Innenräumen kann eine Verschmutzung beispielsweise durch Rauchen, Kochen, Braten etc. verursacht werden.

Zur Erhöhung der Lebensdauer könnte prinzipiell mehr Füllstoff zugegeben werden, da dann selbst bei Auswaschen größerer Mengen an Füllstoff noch ausreichend Material verbliebe um die Anforderungen an die Mattheit zu erfüllen. Ein hoher Füllstoffgehalt führt jedoch zu höherer CO₂-Durchlässigkeit solcher Beschichtungen. Jedoch müssen Betonbeschichtungen häufig CO₂-undurchlässig sein. Beispielsweise muss nach "Teil 3 Massivbau" der oben erwähnten "Zusätzlichen Technische Vertragsbedingungen und Richtlinien für Ingenieurbauten die diffusionsäquivalente Luftschichtdicke (sD-Wert) größer 50 m sein, bestimmt nach der DIN EN 1062-6.

CO₂-Undurchlässigkeit wird oft erreicht mit Beschichtungen, die reich an organischen, filmbildenden Bindemittel bzw. relativ arm an Füllstoffen sind. Um die erforderliche Mattigkeit und CO₂-Undurchlässigkeit zu erreichen wird häufig zunächst eine bindemittelreiche Farbe aufgetragen, die zwar die notwendige CO₂-Undurchlässigkeit gewährleistet aber nicht den Erfordernissen bzgl. Reflektionseigenschaften entspricht. Hierzu wird dann eine zweite Farbschicht mit einer füllstoffreichen Farbe aufgetragen, die die erforderliche Mattheit herstellt.

Das Auftragen von zwei Farbschichten erfordert jedoch einen höheren Arbeitsaufwand was zu höheren Kosten führt. Zudem sind bei Renovierungsarbeiten, z.B. Neuanstreichen von Tunneln, längere Sperrungen notwendig da zwischen dem Auftragen der Farbenschichten diese ja auch noch trocknen muss.

Es besteht daher ein Bedarf an einer reflexionsarmen Beschichtung, die gleichzeitig die geforderte CO₂-Undurchlässigkeit in einem Anstrich bereitstellen kann. Es ist ferner wünschenswert, dass die Oberfläche einer solchen Beschichtung weniger verschmutzungsaffin ist und auch bei intensiver, häufiger Reinigung nicht ihre Eigenschaften einbüßt.

### Zusammenfassung der Erfindung

Es wurde überraschenderweise festgestellt, dass die o.g. Probleme mit einer mehrphasigen Farbzusammensetzung, enthaltend geringe Mengen an Pigmenten und Füllstoffen aber eine relative hohe Menge an Bindemitteln, gelöst werden können.

Die vorliegende Erfindung betrifft daher eine mehrphasige Farbzusammensetzung, enthaltend
a) eine Phase A) als Matrixphase, enthaltend
   Wasser,
   ein oder mehrere Schichtsilikate und
   Bindemittel; und
b) mindestens eine Phase B), welche in Phase A) dispergiert ist, enthaltend
   Wasser,
   Bindemittel und
   Füllstoffe und/oder Pigmente,
wobei die mehrphasige Farbzusammensetzung eine Pigment-Volumen-Konzentration von 1 % bis 25% aufweist.

Die mehrphasigen Farbzusammensetzungen gemäß der vorliegenden Erfindung können auf übliche Weise auf Oberflächen appliziert werden, z.B. durch Rollen, Streichen oder, bevorzugt, Spritzen. Die mehrphasigen Zusammensetzungen gemäß der vorliegenden Erfindung bilden eine strukturierte Oberfläche (Makrostruktur) aus, d.h. eine Oberfläche, die viele Erhöhungen aufweist, wodurch eine reflexionsarme Oberfläche erreicht wird, obwohl nur ein geringer Anteil an Pigmenten und Füllstoffen vorhanden ist, wobei die Pigmente und Füllstoffe nicht oder nur unwesentlich für die Erhöhungen verantwortlich sind. Durch den geringen Gehalt an Pigmenten und Füllstoffen wird ferner die Schmutzaffinität der beschichteten Oberflächen deutlich gesenkt, und in Verbindung mit der Anwesenheit von Bindemittel in der Matrixphase eine geringe CO₂-Durchlässigkeit gewährleistet. Da die Erhöhungen normalerweise keine Poren aufweisen ist auch die Reinigungsfähigkeit der damit beschichteten Oberflächen deutlich erhöht.

Die mehrphasige Farbzusammensetzung der vorliegenden Erfindung zeichnet sich weiterhin dadurch aus, dass die Phasen A) und B) wässrige Phasen sind, die sich jedoch nicht miteinander mischen und die Bestandteile der einen Phase nicht oder lediglich in vernachlässigbar geringer Menge in die andere Phase diffundieren. Auf nicht mit Wasser mischbare organische Lösemitteln oder ähnliches kann also verzichtet werden.

In der vorliegenden Erfindung werden Schichtsilikate nicht zu den Pigmenten und Füllstoffen gerechnet. Bei der Berechnung der Pigment-Volumenkonzentration (PVK) werden die Schichtsilikate ebenfalls nicht mit einbezogen.

Die vorliegende Erfindung betrifft auch Verfahren zur Herstellung der erfindungsgemäßen mehrphasigen Farbzusammensetzung. Demgemäß betrifft die vorliegende Erfindung Verfahren zur Herstellung einer Farbzusammensetzung, enthaltend die folgenden Schritte:
i) Herstellen von Phase A'), enthaltend:
   Wasser und
   ein oder mehrere Schichtsilikate;
ii) Herstellen von Phase B), enthaltend:
   Wasser,
   Bindemittel, und
   Füllstoffe und/oder Pigmente;
iii) Vereinigen von mindestens einem Teils der Phase A'), erhalten in Schritt i), und der Phase B), erhalten in Schritt ii), wobei eine mehrphasige Zusammensetzung mit Phase A') als Matrix und Phase B) als dispergierter Phase erhalten wird, und weiteres Mischen der erhaltenen mehrphasigen Zusammensetzung bis die Tropfen der dispergierten Phase B) eine gewünschte Größe aufweisen. Eine geeignete Größe der Tropfen der dispergierten Phase B) beträgt hierbei beispielsweise 50 bis 5000 µm.
   Das erfindungsgemäße Verfahren umfasst ferner
iv) Zugabe von Bindemitteln und, gegebenenfalls, weiteren Komponenten, z.B. Additiven, zu der mehrphasigen Zusammensetzung, erhalten in Schritt iii).

Ferner betrifft die vorliegende Erfindung die Verwendung der vorstehend beschriebenen mehrphasigen Farbzusammensetzung als reflektionsarme Beschichtung.

Weitere bevorzugte Ausführungsformen der vorliegenden Erfindung sind in der nachstehenden detaillierten Beschreibung und den beigefügten Ansprüchen enthalten.

### Detaillierte Beschreibung der Erfindung

Die vorliegende Erfindung betrifft eine mehrphasige Farbzusammensetzung mit einer Pigment-Volumen-Konzentration von 1% bis 25%, enthaltend a) eine Phase A) als Matrixphase, enthaltend Wasser, ein oder mehrere Schichtsilikate und Bindemittel; und b) mindestens eine Phase B), welche in Phase A) dispergiert ist, enthaltend Wasser, Bindemittel und Füllstoffe und/oder Pigmente.

Wie vorstehend ausgeführt enthält die mehrphasige Farbzusammensetzung der Erfindung eine Phase A) als Matrixphase und darin dispergiert eine Phase B).

### PHASE A)

In einer bevorzugten Ausführungsform enthält die Phase A) der mehrphasigen Farbzusammensetzung, bezogen auf das Gesamtgewicht der Phase A) 50 bis 89 Gew.% Wasser. Stärker bevorzugt enthält Phase A) 55 bis 89 Gew.% Wasser. In einer noch stärker bevorzugten Ausführungsform enthält Phase A) 60 bis 88,5 Gew.% Wasser.

Ferner ist in Phase A) ein Gehalt an einem oder mehreren Schichtsilikaten von 0,5 bis 8 Gew.% bevorzugt, bezogen auf das Gesamtgewicht der Phase A). Stärker bevorzugt sind 1 bis 6 Gew.%, noch stärker bevorzugt 1,5 bis 4 Gew.%

In einer weiteren bevorzugten Ausführungsform enthält Phase A) 10 bis 30 Gew.% Bindemittel, bezogen auf das Gesamtgewicht der Phase A). In einer stärker bevorzugten Ausführungsform sind in Phase A) 15 bis 25 Gew.% Bindemittel enthalten. Diese Angaben beziehen sich jeweils auf den Feststoffanteil im verwendeten Bindemittel.

Als Bindemittel können konventionelle Bindemittel verwendet werden wie sie im Gebiet der Beschichtungen und Farben bekannt sind. Vorzugsweise werden Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkyd-polymeren, Polyvinylalkohol und deren Mischungen eingesetzt.

Besonders bevorzugt sind Homopolymere oder Copolymere von Acrylsäure und/oder Methacrylsäure.

In einer bevorzugten Ausführungsform ist Phase A) der mehrphasigen Farbzusammensetzung frei von Pigmenten und Füllstoffen.

In einer bevorzugten Ausführungsform der erfindungsgemäßen mehrphasigen Farbzusammensetzung beträgt das Gewichtsverhältnis von Bindemittel zu Schichtsilikaten in Phase A) 4 bis 20. Stärker bevorzugt beträgt das Gewichtsverhältnis von Bindemittel zu Schichtsilikaten in Phase A) 7 bis 16.

Phase A) kann des Weiteren bis zu 15,0 Gew.%, vorzugsweise 0,5 bis 10,0 Gew.% bezogen auf den Feststoffanteil von Phase A) an üblichen Additiven, z.B. Dispergiermitteln, Verdickern, Netzmittel, Biozide, Entschäumern, etc., enthalten.

Der Wasseranteil von Phase A) kann bis zu 50 Gew.% oder bis zu 20 Gew.%, bevorzugt bis maximal 5.0 Gew.% durch organische Lösemittel ersetzt werden. Solche organischen Lösemittel können aliphatische oder aromatische Kohlenwasserstoffe, beispielsweise Toluol, Alkohole, Ester, Ketone oder Mischungen hiervon sein, die als Lösemittel für Bindemittel und Lacke bekannt sind. Falls organische Lösemittel vorhanden sind, ist der Wasseranteil von Phase A) normalerweise mindestens durch 0.1 Gew.% organische Lösemittel ersetzt.

### Phase B)

Phase B) der erfindungsgemäßen mehrphasigen Farbzusammensetzung enthält vorzugsweise, bezogen auf das Gesamtgewicht der Phase B), 40 bis 80 Gew.% Wasser. Stärker bevorzugt sind in Phase B) 50 bis 77 Gew.% Wasser, noch stärker bevorzugt 60 bis 74 Gew.% Wasser enthalten.

Ferner enthält die Phase B) der mehrphasigen Farbzusammensetzung vorzugsweise 10 bis 25 Gew.% Bindemittel, bezogen auf das Gesamtgewicht der Phase B). In einer stärker bevorzugten Ausführungsform sind in Phase B) 11 bis 20 Gew.% Bindemittel enthalten, stärker bevorzugt 12 bis 18 Gew.%. Diese Angaben beziehen sich jeweils auf den Feststoffanteil im verwendeten Bindemittel.

Als Bindemittel können konventionelle Bindemittel verwendet werden wie sie im Gebiet der Beschichtungen und Farben bekannt sind. Vorzugsweise werden Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkyd-polymeren, Polyvinylalkohol und deren Mischungen eingesetzt.

Besonders bevorzugt sind Homopolymere oder Copolymere von Acrylsäure und/oder Methacrylsäure.

In einer weiterhin bevorzugten Ausführungsform der Erfindung enthält Phase B) 10 bis 30 Gew.% Pigment und/oder Füllstoffe, bezogen auf das Gesamtgewicht der Phase B). Stärker bevorzugt enthält Phase B) 12 bis 25 Gew.% Pigmente und/oder Füllstoffe, noch stärker bevorzugt 14 bis 20 Gew.%.

Phase B) muss erfindungsgemäß nicht notwendigerweise ein Schichtsilikat enthalten. In einer Ausführungsform sind jedoch auch in Phase B) ein oder mehrere Schichtsilikate vorhanden. In diesen Ausführungsformen enthält Phase B) vorzugsweise, jeweils bezogen auf den Feststoffgehalt, zwischen 0,5 und 1,5 Gew.% Schichtsilikat.

Phase B) kann des Weiteren bis zu 15,0 Gew.%, vorzugsweise bis zu 10,0 Gew.% bezogen auf den Feststoffanteil von Phase B) an üblichen Additiven, z.B. Dispergiermitteln, Verdickern, Netzmittel, Biozide, Entschäumern, etc., enthalten.

Der Wasseranteil von Phase B) kann bis zu 50 Gew.% oder bis zu 20 Gew.% durch organische Lösemittel ersetzt werden. Solche organischen Lösemittel können aliphatische oder aromatische Kohlenwasserstoffe, beispielsweise Toluol, Alkohole Ester oder Ketone, sein, die als Lösemittel für Bindemittel und Lacke bekannt sind.

Vorzugsweise ist Phase B) frei von organischen Lösemitteln.

Die mehrphasige Farbzusammensetzung der vorliegenden Erfindung enthält Phase A) als kontinuierliche Phase (Matrixphase) und Phase B) als innere Phase (dispergierte Phase).

Die dispergierte Phase B) der erfindungsgemäßen mehrphasigen Farbzusammensetzung liegt vorzugsweise in Form von Tropfen einer mittleren Größe von 50 bis 5000 µm vor. Die Größe der Tropfen der Phase B) beträgt stärker bevorzugt sind 100 bis 3000 µm.

Vorzugsweise besteht Phase B) zu mindestens 50 Gew.% aus Tropfen, die ein Seitenverhältnis von weniger als 1,5 aufweisen, stärker bevorzugt sind mindestens 65 Gew.%, noch stärker bevorzugt mindestens 80 Gew.%. In einer bevorzugten Ausführungsform besteht Phase B) aus Tropfen, die ein Seitenverhältnis von weniger als 1,5 aufweisen.

In der Regel handelt es sich hierbei um Kugeln oder Ellipsoide.

In Phase B) beträgt das Gewichtsverhältnis von Pigmenten und Füllstoffen zu Bindemittel vorzugsweise 1 bis 2,5. In einer stärker bevorzugten Ausführungsform beträgt das Gewichtsverhältnis von Pigmenten und Füllstoffen zu Bindemittel in Phase B) 1,2 bis 1,8.

Phase B) enthält vorzugsweise, jeweils bezogen auf den Feststoffgehalt, zwischen 35 und 70 Gew.% an Pigmenten und Füllstoffen, vorzugsweise zwischen 45 und 65 Gew.% an Pigmenten und Füllstoffen.

Die Pigmente und/oder Füllstoffe werden vorzugsweise aus pyrogen gefällter Kieselsäure, gefällter Kieselsäure, Silizium-Aluminium-Mischoxiden, Carbonaten, z.B. Erdalkalicarbonate wie Calciumcarbonat, Siliziumdioxid, Sulfate, z.B. Bariumsulfate, Titandioxid, Buntpigmente, z.B. Eisenoxide, Bismutvanadate oder Mischungen hiervon ausgewählt. Vorzugsweise enthält Phase B) Titandioxid und/oder Carbonate, z.B. Calciumcarbonat.

Die Größe der Pigmentpartikel und Füllstoffpartikel liegt normalerweise im Bereich von 0,1 bis 75 µm, vorzugsweise 0,2 bis 50 µm, stärker bevorzugt 0,3 bis 30 µm.

Die Größe der Pigmentpartikel und Füllstoffpartikel ist geringer als die Größe der Tropfen von Phase B).

Die Tropfen der Phase B) ändern ihre Größe und Form beim Trocknen der mehrphasigen Farbzusammensetzung gemäß der vorliegenden Erfindung nach deren Auftragung im Wesentlichen nicht. Die Tropfen liegen auf der beschichteten Oberfläche auf und sind normalerweise höher als die zwischen den Tropfen auf der Oberfläche befindlichen Teil der mehrphasigen Farbzusammensetzung, z.B. der Schichtsilikate aus Phase A) bzw. das in Phase A) optional enthaltene Bindemittel. Da sich die Tropfen der Phase B) der mehrphasigen Farbzusammensetzung der vorliegenden Erfindung bei Auftragung auf eine Oberfläche sich normalerweise flach auf diese Oberfläche legen, führt ein hohes Seitenverhältnis der Tropfen zu einer vergleichsweise geringen Erhöhung. Jedoch erhöht die Kombination von Tropfen verschiedener Formen und/oder Größen die diffuse Reflektion noch weiter wodurch die Oberfläche noch matter wird. Zusätzlich oder alternativ können Tropfen unterschiedlicher Pigmentierung verwendet werden.

Die dispergierte Phase B) der mehrphasige Farbzusammensetzung kann in wesentlichen Tropfen gleicher Art enthalten oder kann aus mehreren verschiedenen dispergierten Phasen bestehen. Im Kontext der vorliegenden Erfindung wird mit dem Begriff "Phase B)" die Gesamtheit aller dispergierten Phasen bezeichnet und einzelne unterschiedliche dispergierte Phasen werden jeweils mit dem Begriff "Phase B1)", "Phase B2)" usw. bezeichnet.

Phase B) der mehrphasigen Farbzusammensetzung gemäß der vorliegenden Erfindung kann wie vorstehend ausgeführt mehrere verschiedene dispergierte Phasen B1), B2), B3) etc. enthalten, die ebenfalls innere Phasen sind. Normalerweise enthält die Farbzusammensetzung nicht mehr als vier dieser zusätzlichen verschiedenen dispergierten Phasen B1), B2), B3) etc.

Wenn Phase B) mehrere dispergierte Phasen B1), B2), B3) etc. enthält, so unterscheiden sich diese normalerweise untereinander durch ihre Pigmentierung und/oder ihre Tropfengrößen und/oder ihre Tropfenformen. Dadurch wird die Reflektion noch diffuser, was die Blendgefahr weiter reduziert. Beispielsweise führt bereits die Verwendung von Pigmenten mit verschiedenen Weißgraden in der jeweiligen Phase B1), B2), B3) etc., falls vorhanden, zu mehr diffuser Reflektion, was die Blendgefahr weiter reduziert. Eine unterschiedliche Pigmentierung ermöglicht ferner dispergierte Phasen mit unterschiedlicher Farbe und/oder Helligkeit. Auch dadurch können die Reflexionseigenschaften der Farbzusammensetzung günstig beeinflusst werden. Beispielsweise sollen im Tunnelbau verwendete Farbzusammensetzung einerseits reflexionsarm sein. Dies könnte durch relativ dunkle Farben erreicht werden. Andererseits sollten Farben für eine verkehrsnahe Verwendung wie dem Tunnelbau auch relativ hell sein, damit eventuelle Hindernisse leichter erkannt werden können. Durch Verwendung von verschiedenen dispergierten Phasen, die aufgrund unterschiedlicher Pigmentierung eine unterschiedliche Helligkeit aufweisen, kann gemäß der Erfindung die benötigte Reflexionsarmut und Helligkeit leicht eingestellt werden. In einer bevorzugten Ausführungsform enthält die dispergierte Phase B) zwei oder mehr verschiedene dispergierte Phasen, die sich hinsichtlich der mittleren Größe der Tropfen, dem mittleren Seitenverhältnis der Tropfen und/oder der Farbe unterscheiden. Stärker bevorzugt enthält Phase B) der mehrphasigen Farbzusammensetzung mindestens zwei dispergierte Phasen B1) und B2), wobei das mittlere Seitenverhältnis der Tropfen der Phase B1) um mehr als 50% vom mittleren Seitenverhältnis der Tropfen der Phase B2) abweicht. In einer weiteren stärker bevorzugten Ausführungsform enthält Phase B) der mehrphasigen Farbzusammensetzung mindestens zwei dispergierte Phasen B1) und B2), wobei die mittlere Größe der Tropfen der Phase B1) um mehr als 50% von der mittleren Größe der Tropfen der Phase B2) abweichen.

Phase B) weist erfindungsgemäß typischerweise ein höhere Viskosität auf als Phase A). In bevorzugten Ausführungsformen beträgt die Viskosität von Phase B) 1,5 Pas oder mehr, stärker bevorzugt 1,75 Pas oder mehr, noch stärker bevorzugt 2,0 Pas oder mehr. Die Viskosität von Phase B) liegt normalerweise unter 3,0 Pas.

Die Merkmale von Phase B) der vorliegenden Erfindung, inklusive aller bevorzugten Merkmale, sind vorzugsweise ebenfalls Merkmale der dispergierten Phasen B1), B2), B3), etc. falls vorhanden.

### MEHRPHASIGE FARBZUSAMMENSETZUNG

In einer bevorzugten Ausführungsform weist die mehrphasige Farbzusammensetzung wie vorstehend beschrieben ein Gewichtsverhältnis zwischen der Gesamtmenge an Schichtsilikat und der Gesamtmenge an Füllstoffen und Pigmenten, jeweils bezogen auf die Festsubstanz der mehrphasigen Farbzusammensetzung, von mindestens 0,3 auf. In einer stärker bevorzugten Ausführungsform beträgt das Gewichtsverhältnis zwischen der Gesamtmenge an Schichtsilikat und der Gesamtmenge an Füllstoffen und Pigmenten mindestens 0,35, stärker bevorzugt mindestens 0,40. Vorzugsweise beträgt das Gewichtsverhältnis, jeweils bezogen auf die Festsubstanz der mehrphasigen Farbzusammensetzung, zwischen der Gesamtmenge an Schichtsilikat und der Gesamtmenge an Füllstoffen und Pigmenten 5,0 oder weniger, stärker bevorzugt 2,5 oder weniger, noch stärker bevorzugt ist 1,0 oder weniger. Am stärksten bevorzugt ist 0,75 oder weniger.

Vorzugsweise beträgt das Gewichtsverhältnis, jeweils bezogen auf die Festsubstanz der mehrphasigen Farbzusammensetzung, zwischen der Gesamtmenge an Schichtsilikat und der Gesamtmenge an Füllstoffen und Pigmenten von 0,3 bis 1,0, stärker bevorzugt 0,35 bis 0,75.

Das Gewichtsverhältnis, jeweils bezogen auf die Festsubstanz der mehrphasigen Farbzusammensetzung, zwischen der Gesamtmenge an Bindemittel und der Gesamtmenge an Füllstoffen und Pigmenten beträgt vorzugsweise 2,0 bis 10, stärker bevorzugt sind 2,5 bis 7,5 und noch stärker bevorzugt sind 3,0 bis 5,0. In einer bevorzugten Ausführungsform beträgt das Gewichtsverhältnis, jeweils bezogen auf die Festsubstanz, zwischen der Gesamtmenge an Bindemittel und der Gesamtmenge an Füllstoffen und Pigmenten beträgt 3,2 bis 4,2.

Die Gesamtmenge an Füllstoffen und Pigmenten bezogen auf den Feststoffanteil der mehrphasigen Farbzusammensetzung beträgt vorzugsweise zwischen 1,0 und 25 Gew.-%, bevorzugter sind 5,0 bis 25 Gew.%, stärker bevorzugt sind 10 bis 20 Gew.%.

Die Pigment-Volumenkonzentration (PVK) der mehrphasigen Farbzusammensetzung beträgt vorzugsweise 2% bis 15%, stärker bevorzugt ist 3% bis 10%.

Der Bindemittelanteil der mehrphasigen Farbzusammensetzung, bezogen auf den Feststoffanteil der mehrphasigen Farbzusammensetzung, beträgt vorzugsweise 55 bis 80 Gew.%, stärker bevorzugt sind 60 bis 75 Gew.%.

Der Anteil an Schichtsilikat der mehrphasigen Farbzusammensetzung, bezogen auf den Feststoffgehalt der mehrphasigen Farbzusammensetzung, ist vorzugsweise zwischen 3,0 und 12 Gew.%, stärker bevorzugt sind 5,0 bis 10 Gew.%.

Geeignete Schichtsilikate sind im Handel erhältlich und umfassen quellfähige Schichtsilikate, beispielsweise aus der Montmorillonit-, Vermiculit- oder Sepiolith-Gruppe, oder Mineralgemenge, enthaltend quellfähige Schichtsilikate wie Smektite, sowie quellfähige synthetische Schichtsilikate.

Die mehrphasige Farbzusammensetzung kann des Weiteren bis zu 15,0 Gew.%, vorzugsweise bis zu 10,0 Gew.% bezogen auf den Feststoffanteil der mehrphasigen Farbzusammensetzung an üblichen Additiven, z.B. Dispergiermitteln, Verdickern, Netzmittel, Biozide, Entschäumern, etc., enthalten.

Die mehrphasige Farbzusammensetzung weist nach Auftragung vorzugsweise einen Glanzwert von unter 60 Glanzeinheiten gemessen nach DIN EN ISO 2813:1999 unter einem Messwinkel von 60° auf, stärker bevorzugt sind unter 40 Glanzeinheiten, noch stärker bevorzugt sind unter 20 Glanzeinheiten unter einem Messwinkel von 60°. Die DIN EN ISO 2813:1999 verwendet noch den Begriff "Reflektometerwert". In der vorliegenden Erfindung werden "Reflektometerwert" und "Glanzwert" synonym verwendet.

"Reflektionsarm" gemäß der vorliegenden Erfindung sind Beschichtungen die einen Glanzwert von unter 60 Glanzeinheiten gemessen nach DIN EN ISO 2813:1999 unter einem Messwinkel von 60° aufweisen.

Die Mehrphasigkeit der Farbzusammensetzung der vorliegenden Erfindung führt normalerweise zu einer Oberflächenstruktur die Erhöhungen aufweist. Dies ist vorteilhaft für die Mattigkeit, da eine derartige Struktur in der Regel die diffuse Reflektion erhöht und damit den Glanzwert reduziert.

Vorzugsweise enthalten sowohl Phase A) als auch Phase B) ein oder mehrere Schichtsilikate. Das Gewichtsverhältnis des in Phase B) enthaltenden Schichtsilikats zu dem in Phase A) enthaltenden Schichtsilikats liegt vorzugsweise zwischen 0 und 0,04, stärker bevorzugt zwischen 0 und 0,02. Sollte Phase B) der mehrphasigen Farbzusammensetzung gemäß der vorliegenden Erfindung aus mehreren verschiedenen dispergierten Phasen B1), B2), B3) etc. bestehen, so betrifft das zuvor genannte Gewichtsverhältnis das Gewichtsverhältnis zwischen des in Phase A) enthaltenden Schichtsilikats zu dem in der Phase B), d.h. der Gesamtheit der Phasen B1), B2), B3) etc., falls vorhanden, enthaltenen Schichtsilikates.

Das Gewichtsverhältnis zwischen Phase A) und Phase B) beträgt vorzugsweise 90:10 bis 60:40, stärker bevorzugt sind 90:10 zu 70:30. Sollte Phase B) der mehrphasigen Farbzusammensetzung gemäß der vorliegenden Erfindung mehrere dispergierte Phasen B1), B2), B3) etc. enthalten, so betrifft das zuvor genannte Gewichtsverhältnis das Gewichtsverhältnis zwischen Phase A) zu der Gesamtheit der Phasen B1), B2), B3) etc., falls vorhanden.

### HERSTELLUNG DER MEHRPHASIGEN FARBZUSAMMENSETZUNG

Die vorliegende Erfindung umfasst auch Verfahren zur Herstellung der erfindungsgemäßen mehrphasigen Farbzusammensetzung, wobei das Verfahren die folgenden Schritte umfasst: i) Herstellen von Phase A'), enthaltend: Wasser und ein oder mehrere Schichtsilikate; ii) Herstellen von Phase B), enthaltend: Wasser, Bindemittel, und Füllstoffe und/oder Pigmente; iii) Vereinigen von mindestens einem Teils der Phase A'), erhalten in Schritt i), und der Phase B), erhalten in Schritt ii), wobei eine mehrphasige Zusammensetzung mit Phase A') als Matrix und Phase B) als dispergierter Phase erhalten wird, und weiteres Mischen der erhaltenen mehrphasigen Zusammensetzung bis die Tropfen der dispergierten Phase B) eine gewünschte Größe aufweisen. Geeignete Tropfengrößen in diesem Zusammenhang umfassen beispielsweise 50 bis 5000 µm. Das erfindungsgemäße Verfahren umfasst fernen den Schritt iv) Zugabe von Bindemitteln und, gegebenenfalls, weiteren Komponenten, wie etwa Additiven, zu der mehrphasigen Zusammensetzung, erhalten in Schritt iii). Die Mengen an Füllstoffen, Pigmenten bzw. Bindemittel werden dabei so gewählt, dass eine mehrphasige Farbzusammensetzung mit einer Pigment-Volumen-Konzentration von 1% bis 25% resultiert.

Zusammengefasst wird erfindungsgemäß eine Matrixphase ohne Bindemittel hergestellt und in dieser eine oder mehrere dispergierte Phasen dispergiert bevor zu der Matrixphase Bindemittel zugegeben wird.

Die einzelnen Phasen der mehrphasigen Farbzusammensetzung der vorliegenden Erfindung können auf die übliche, dem Fachmann bekannte Art und Weise hergestellt werden. Normalerweise wird hierzu das Schichtsilikat vor Zugabe zu der Farbzusammensetzung oder Phasen in Wasser oder einer Mischung aus Wasser und organischen Lösemitteln, bevorzugt Wasser, dispergiert wie allgemein bekannt. Danach werden die weiteren Komponenten der jeweiligen Phase der mehrphasigen Farbzusammensetzung auf die übliche Art und Weise vereinigt. Matrixphase und die eine oder mehrere zu dispergierenden Phasen werden getrennt hergestellt, die eine oder mehrere zu dispergierenden Phasen werden jeweils in Matrixphase dispergiert und die erhaltenen Systeme vereinigt, wobei anschließend Bindemittel zur Matrixphase gegeben wird.

Die bevorzugten Ausführungsformen der mehrphasigen Farbzusammensetzung der vorliegenden Erfindung gelten auch für das Verfahren und die Verwendung gemäß der vorliegenden Erfindung einschließlich sämtlicher bevorzugter Ausführungsformen hiervon und umgekehrt.

In einer bevorzugten Ausführungsform des erfindungsgemäßen Verfahrens werden vor dem Ausführen von Schritt iv) die Schritte ii) und iii) mindestens einmal wiederholt, wobei jeweils eine weitere mehrphasige Zusammensetzung erhalten wird, die jeweils eine weitere dispergierte Phase enthält, und nachfolgend werden die jeweiligen mehrphasigen Zusammensetzungen vereinigt. Auf diese Weise wird eine mehrphasige Farbzusammensetzung gemäß der vorliegenden Erfindung erhalten, die eine Phase B), enthaltend mehrere verschiedene Phasen B1), B2), B3) etc., umfasst, die vorzugsweise eine verschiedene Pigmentierung und/oder verschiedene Tropfengrößen und/oder verschiedene Tropfenformen aufweisen. In diesem Fall werden diese verschiedenen dispergierten Phasen B1), B2), B3) etc., wenn vorhanden, vorzugsweise in separaten Gefäßen, hergestellt.

Falls verschiedene Farbtöne für verschiedene Anwendungen erzielt werden sollen kann eine Basiszusammensetzung für Phase B) erzeugt werden, die alle Komponenten enthält, die in allen dispergierten Phasen B1), B2), B3), etc., falls vorhanden, vorhanden sind, z.B. bis auf die farbgebenden Pigmente. Diese Basiszusammensetzung kann vor Zugabe der farbgebenden Pigmente in verschiedene Portionen aufgeteilt werden, die dann in separaten Gefäßen mit zusätzlichen Komponenten, beispielsweise farbgebenden Pigmenten, versetzt werden können um die Phasen B1), B2), B3), etc., falls vorhanden, zu erhalten.

Die Basiszusammensetzung kann bereits geringe Mengen an Pigmenten, z.B. bis zu 5 Gew.% bezogen auf den Feststoffgehalt der Basiszusammensetzung enthalten.

Die Menge an farbgebenden Pigmenten die zu der Basiszusammensetzung zugegeben werden können beträgt, vorzugsweise 1 bis 25 Gew.% bezogen auf den Feststoffgehalt der Basiszusammensetzung.

Phase A') kann, wie oben in Schritt i) hergestellt, vor Vereinigung mit Phase B) in verschiedene Portionen aufgeteilt werden, die dann jeweils mit der einen oder den mehreren weiteren Phasen B1), B2), B3) etc., vorzugsweise in separaten Gefäßen, vereinigt werden. Alternativ können auch individuelle Phasen A') gemäß der vorliegenden Erfindung für jede Phase B1), B2), B3), etc., falls vorhanden hergestellt werden, wobei diese Phasen A') identisch oder unterschiedlich sein können.

Die verschiedenen zu dispergierenden Phasen können sukzessive mit der Matrixphase vereinigt werden. Vorzugsweise wird jedoch die Vereinigung einer jeden zu dispergierenden Phase mit der jeweiligen Phase A') in Schritt iii) in einem separaten Gefäß durchgeführt. Dadurch können die Bedingungen so gewählt werden, dass die Phasen B1), B2), B3), etc., falls vorhanden, jeweils unterschiedliche Tropfengrößen und/oder Tropfenformen aufweisen.

Nach Vereinigung der jeweiligen Phasen A'), enthaltend darin dispergiert die Phasen B1), B2), B3), etc., mischen sich die jeweiligen Phasen A') und bilden eine einheitliche Matrixphase, während die dispergierten Phasen B1), B2), B3), etc., darin dispergiert bleiben. Nachfolgend wird durch Zugabe von Bindemittel und gegebenenfalls weiterer Komponenten in Schritt iv) die Phase A) erhalten.

Insbesondere können die einzelnen Schritte wie folgt ausgeführt werden:

### Schritt i)

Das Gewichtsverhältnis von Schichtsilikat zu Wasser oder einer Mischung aus Wasser und organischen Lösemitteln in Phase A') beträgt vorzugsweise 1:99 bis 20:80, vorzugsweise 5:95 bis 15:85.

Das Schichtsilikat wird wie oben bereits ausgeführt in Wasser oder einer Mischung aus Wasser und organischen Lösemitteln, bevorzugt Wasser, dispergiert.

Danach können die weiteren Komponenten, sofern vorhanden, z.B. Additive, zugegeben und, optional, mit Wasser oder einer Mischung aus Wasser und organischen Lösemitteln, bevorzugt Wasser, verdünnt werden.

Falls verdünnt wird ist das Gewichtsverhältnis zwischen dem Wasser, bzw. der Mischung aus Wasser und organischen Lösemitteln in denen das Schichtsilikat zunächst dispergiert wird zu dem Wasser, bzw. der Mischung aus Wasser und organischen Lösemitteln mit dem verdünnt wird 70:30 bis 20:80, vorzugsweise 50:50 bis 30:70.

### Schritt ii)

Die Komponenten von Phase B) werden auf die übliche, dem Fachmann bekannte Weise kombiniert.

Analoges gilt wenn mehrere verschiedene dispergierte Phasen eingestzt werden sollen.

### Schritt iii)

Phase A') erhalten aus Schritt i) wird mit Phase B) erhalten aus Schritt ii) vereinigt, vorzugsweise in einem Gewichtsverhältnis zwischen Phase A') und Phase B) von 90:10 bis 60:40, stärker bevorzugt sind 90:10 zu 70:30.

Die Schritte ii) und iii) können gegebenenfalls wiederholt werden wenn mehrere verschiedene dispergierte Phasen B1), B2), B3) etc., eingesetzt werden sollen.

Durch die Durchführung des Mischvorganges kann die Größe der Tropfen von Phase B), bzw. B1), B2), B3) etc., falls vorhanden, eingestellt werden.

Als Mischwerkzeuge können beispielsweise Ultraschallbäder oder Propellerrührer verwendet werden. Ultraschallbäder führen normalerweise zu kugelförmigen oder beinahe kugelförmigen Tropfen, deren Größe durch Dauer der Ultraschallbehandlung und Frequenz bestimmt werden kann.

Da die Tropfen von Phase B) nach Auftragung der Farbe weder ihre Form noch ihre Größe verändern, kann die Tropfengröße während der Behandlung im Ultraschallbad durch Probenentnahme und Bestimmung wie im experimentellen Teil beschrieben schnell festgestellt werden ohne dass die mehrphasige Farbzusammensetzung getrocknet, ausgehärtet oder dergleichen werden muss. Analoges gilt auch für andere Mischapparate/-verfahren, wie etwa Harfen oder Disolverscheiben.

Propellerrührer werden normalerweise bei Umdrehungsgeschwindigkeiten von 500 bis 2500 Umdrehungen pro Minute (U/min) betrieben. Propellerrührer führen normalerweise ebenfalls zu kugelförmigen Tropfen.

Eine höhere Umdrehungsgeschwindigkeit und eine höhere Rührzeit führen jeweils zu kleineren Tropfen. Die Propellerform hat ebenfalls einen Einfluss auf die Tropfengröße wobei die Bedingungen zum Erreichen der gewünschten Tropfengröße leicht durch wenige gezielte Versuche ermittelt werden können.

Normalerweise führen bei gleicher Tropfengröße eine längere Rührzeit bei niedriger Geschwindigkeit zu kugelförmigeren Tropfen als eine kurze Rührzeit bei hoher Geschwindigkeit.

Zum Erhalt stäbchenförmige Tropfen kann mit kamm- oder harfenförmigen Rührwerkzeugen gearbeitet werden, die mit Rührgeschwindigkeiten von ca. 50 bis 1800 U/min betrieben werden. Dabei werden typischerweise Tropfen mit hohem Seitenverhältnis erhalten.

Phase B) löst sich nicht in Phase A') sondern bildet normalerweise Tropfen aus, die in der Phase A') dispergiert sind und auch nach Auftragen auf eine Oberfläche ihre Form und Größe im Wesentlichen nicht verändern. D.h. auch nach der Zugabe von Bindemitteln in Schritt iv) bleibt Phase B) bzw. die Phasen B1), B2), B3) etc., falls vorhanden, erhalten.

### Schritt iv)

Das Bindemittel, welches in Schritt iv) zugegeben wird, bildet einen Bestandteil von Phase A) gemäß der vorliegenden Erfindung.

Die bevorzugten Merkmal des Verfahrens der vorliegenden Erfindung sind auch bevorzugte Merkmale der mehrphasigen Farbzusammensetzung der vorliegenden Erfindung und der Verwendung der vorliegenden Erfindung und umgekehrt.

Die vorliegende Erfindung umfasst ferner auch eine mehrphasige Zusammensetzung wie vorstehend beschrieben, erhältlich durch
(i) Herstellen von Phase A'), enthaltend:
   Wasser und
   ein oder mehrere Schichtsilikate;
(ii) Herstellen von Phase B), enthaltend:
   Wasser,
   Bindemittel, und
   Füllstoffe und/oder Pigmente;
(iii) Vereinigen von mindestens einem Teils der Phase A'), erhalten in Schritt i), und der Phase B), erhalten in Schritt ii), wobei eine mehrphasige Zusammensetzung mit Phase A') als Matrix und Phase B) als dispergierter Phase erhalten wird, und weiteres Mischen der erhaltenen mehrphasigen Zusammensetzung bis die Tropfen der dispergierten Phase B) eine gewünschte Größe aufweisen, beispielsweise 50 bis 5000 µm;
(iv) Zugeben von Bindemitteln und, gegebenenfalls, weiteren Komponenten, z.B. Additiven, zu der mehrphasigen Zusammensetzung, erhalten in Schritt iii).

Die Erfindung umfasst auch die Verwendung der erfindungsgemäßen mehrphasigen Farbzusammensetzung gemäß als reflektionsarme Beschichtung. Vorzugsweise wird dabei die mehrphasige Farbzusammensetzung als reflektionsarme Beschichtung an Außenflächen verwendet. In einer weiteren bevorzugten Ausführungsform wird die erfindungsgemäße mehrphasige Farbzusammensetzung als reflektionsarme Beschichtung für verkehrsnahe Flächen verwendet wird, wie z.B. Tunnel, Brücken, Lärmschutzwände, Parkhäuser, etc.

Die bevorzugten Merkmal der mehrphasigen Farbzusammensetzung der vorliegenden Erfindung und des Verfahrens der vorliegenden Erfindung sind auch bevorzugte Merkmale der Verwendung der vorliegenden Erfindung und umgekehrt.

Die mehrphasige Farbzusammensetzung der vorliegenden Erfindung kann durch Rollen, Streichen oder, bevorzugt, spritzen aufgetragen werden. Auf ein Glattziehen oder ähnliches der aufgetragenen Beschichtung wird normalerweise verzichtet, da dies die unebene Oberflächenstruktur teilweise oder ganz zerstören kann. Beim Auftragen der Farbzusammensetzung durch Spritzen wird mit üblichen Drücken gearbeitet, damit die Tropfen der Phase B) nicht durch eine hohe zu Aufprallgeschwindigkeit auf die zu beschichtende Oberfläche deformiert werden.

Die Höhe der resultierenden Erhöhungen kann bis zu 3000 µm betragen. Die Höhe beträgt üblicherweise mindestens 50 µm, stärker bevorzugt sind 100 µm bis 3000 µm.

### Beispiele

### Messung der Größe und des Seitenverhältnisses der Tropfen der Phase B), B') etc.

Ein Probe der Farbzusammensetzung wird auf einen Objektträger aufgetragen und gegebenenfalls kurz trocknen gelassen. Danach wird der Objektträger senkrecht zur Ebene des Objektträgers betrachtet. Die größte Entfernung innerhalb eines Tropfens die dabei sichtbar ist, ist dessen Größe. Diese Messung wird an mehreren Tropfen wiederholt um eine mittlere Tropfengröße zu erhalten.

Zur Bestimmung des Seitenverhältnisses wird die die im vorangegangen Absatz bestimmte Größe durch die kürzeste Entfernung innerhalb des Tropfens dividiert. Die kürzeste Entfernung ist gemäß der vorliegenden Erfindung die geringste Entfernung zweier Punkte der Oberfläche des Tropfens deren Verbindungslinie die Mitte der Verbindungslinie der größten Entfernung schneidet. Die Bestimmung des Seitenverhältnisses von mehreren Tropfen liefert ein mittleres Seitenverhältnis.

### Messung der Höhe der Erhebungen

Die Bestimmung der Höhe der Erhebung entspricht im Prinzip einer Schichtdickenbestimmung. Hierzu stehen dem Fachmann verschiedene einfache Möglichkeiten zur Verfügung. Beispielsweise kann die Höhe der Erhebungen an einem Seitenschnitt der fertigen Beschichtung durch einfaches Messen bestimmt werden. Hierzu wird die Farbe auf einen ebenen Objektträger aufgetragen und gegebenenfalls kurz getrocknet. Danach wir der Objektträger in Längsrichtung parallel zu den Seiten des Objektträgers und senkrecht zur Fläche des Objektträgers geschnitten und die Höhe Erhebungen senkrecht zur Schnittfläche, also parallel zur Fläche des Objektträgers bestimmt. Mehrmaliges Wiederholen dieser Messungen liefert einen Mittelwert. Alternativ kann die Höhe der Erhebungen mittels einem 3D-Mikroskop (beispielsweise Leica DCM 3D) erfolgen. Eine weitere Möglichkeit ist magnetische Schichtdickenbestimmung, wobei die Farbzusammensetzung auf eine Folie einheitlicher Dicke aufgetragen, und die beschichtete Folie auf einen magnetischen Untergrund aufgebracht wird. Magnetische Messungen liefern dann die lokale Schichtdicke und somit die Höhe der Erhebungen.

### Glanzwert:

Gemessen gemäß DIN EN ISO 2813:1999 unter einem Betrachtungswinkel von 60°. Die DIN EN ISO 2813:1999 verwendet den Begriff "Reflektometerwert" anstelle von Glanzwert. In der vorliegenden Anmeldung werden beide Begriffe synonym verwendet.

Als Messgerät kam ein Byk Gardner micro-TRI gloss zum Einsatz.

Da es sich um eine unebene Oberfläche handelt wurden mindestens vier Messungen durchgeführt und der Mittelwert daraus gebildet.
CO₂-Durchlässigkeit:
Gemessen gemäß DIN EN 1062-6.
Pigment-Volumen-Konzentration:

Die Pigment-Volumen-Konzentration (EN ISO 4618-1) gibt das Volumenverhältnis zwischen Pigmenten / Füllstoffen und dem Bindemittel im Beschichtungsfilm wieder.

Die ebenfalls in der Rezeptur enthaltenen Additive wurden in der Berechnung nicht berücksichtigt. Lösemittel und Wasser sind im gehärteten Film ohnehin nicht mehr enthalten und fallen damit ebenfalls weg.

### Viskosität

Die Viskosität wird auf dem Fachmann bekannte Weise bestimmt, beispielsweise unter Verwendung eines Physica Rheolab MC1 Messgeräts.

### Phase A'):

| **Bezeichnung** | **Gew**.-**teile** |
|---|---|
| Wasser | 40,0 |
| Synthetisches Schichtsilikat | 8,0 |
| Schichtsilikat, Smektit (Bentonit) | 2,0 |
| Wasser | 50,0 |

Als synthetisches Schichtsilikat wurde ein handelsübliches synthetisches Schichtsilikat eingesetzt. Die oben genannten Mengen an Schichtsilikaten wurden zunächst in 40 Gewichtsteilen Wasser suspendiert und kurz gerührt. Anschließend wurden weitere 50 Gewichtsteile Wasser unter Rühren hinzugegeben.

Das resultierende Produkt hatte eine Dichte von 1,050 g/ml, eine Viskosität von 0,078 Pas und einen pH-Wert von 9,4.

### Basiszusammensetzung von zu dispergierender Phase:

Zunächst wurde ein Sol von 3,5 Gewichtsteilen eines handelsüblichen synthetischen Schichtsilikats, in 96,5 Gewichtsteilen Wasser hergestellt.

| **Bezeichnung** | **Gew**.-**teile** |
|---|---|
| Wasser | 44,0 |
| Additive | 3,0 |
| TiO₂ | 1,0 |
| Füllstoff CaCO₃ | 15,0 |
| Dispersionsbindemittel (50% Feststoffanteil) | 28,0 |
| Synthetisches Schichtsilikat (Sol, 3,5%) | 9,0 |

Die oben genannten Komponenten wurden in den angegebenen Mengen vereinigt und kurz gerührt.

Das resultierende Produkt hatte eine Dichte von 1,125 g/ml, eine Viskosität von 2,17 Pas und einen pH-Wert von 9,17.

Anschließend wurden drei verschieden gefärbte Phasen B1), B2) und B3) durch Zugabe von Pigmenten hergestellt.

| Pigment | B1) | B2) | B3) |
|---|---|---|---|
| Oxidisches Gelbpigment | 0,07 | 0,25 | |
| Oxidisches Rotpigment | | 0,1 | |
| Oxidisches Grünpigment | | | 0,2 |
| Weißpigment | 7 | 3 | 4 |

Die Phasen B1), B2) und B3) wurden dann jeweils in einem Gewichtsverhältnis von 1:1 mit der Phase A') wie folgt vereinigt.
(B1 + A') wurde mit einem Propellerrührer im Dissolver 2 min bei 1000 U/min gemischt. Dabei wurde eine durchschnittliche Tropfengröße ca. 3000 µm erhalten.
(B2 + A') wurde mit einem Propellerrührer im Dissolver 3 min bei 1200 U/min gemischt. Dabei wurde eine durchschnittliche Tropfengröße ca. 1000 µm erhalten.
(B3 + A') wurde mit einem Propellerrührer im Dissolver 3 min bei 1600 U/min gemischt. Dabei wurde eine durchschnittliche Tropfengröße ca. 100-150 µm erhalten.

Anschließend wurde die mehrphasige Farbzusammensetzung wie folgt hergestellt.

| **Bezeichnung** | **Gew**.-**teile** |
|---|---|
| Dispersionsbindemittel (48% Feststoffanteil) | 32,0 |
| Wasser | 23,5 |
| Additive | 0,5 |
| organisches Lösemittel | 2,0 |
| A') + B1) | 23,0 |
| A') + B2) | 18,0 |
| A') + B3) | 1,0 |

Die oben genannten Inhaltsstoffe wurden zusammengefügt und kurz verrührt.

Das resultierende Produkt hatte eine Dichte von 1,055 g/ml, eine Viskosität von 0,58 Pas und einen pH-Wert von 8,6.

Das erhaltene Produkt wurde durch Aufspritzen appliziert. Dabei wurde nach Trocknung ein Glanzwert von 8,1 bestimmt. Bei Auftragung des Produkts durch Rollen wurde ein Glanzwert von 12,6 erhalten.

Die Bestimmung der CO₂-Durchlässigkeit ergab einen SD-Wert von mehr als 50 m, d.h. die erhaltene Farbzusammensetzung wirkt als Karbonisationsbarriere.

## Patentansprüche

1. Mehrphasige Farbzusammensetzung, enthaltend
a) eine Phase A) als Matrixphase, enthaltend
Wasser,
ein oder mehrere Schichtsilikate und
Bindemittel; und
b) mindestens eine Phase B), welche in Phase A) dispergiert ist, enthaltend
Wasser,
Bindemittel und
Füllstoffe und/oder Pigmente,
wobei die mehrphasige Farbzusammensetzung eine Pigment-Volumen-Konzentration von 1% bis 25% aufweist.

2. Mehrphasige Farbzusammensetzung gemäß Anspruch 1, wobei das Gewichtsverhältnis, jeweils bezogen auf die Festsubstanz der mehrphasigen Farbzusammensetzung, zwischen der Gesamtmenge an Schichtsilikat und der Gesamtmenge an Füllstoffen und Pigmenten mindestens 0,3, vorzugsweise mindestens 0,35, stärker bevorzugt mindestens 0,40 beträgt.

3. Mehrphasige Farbzusammensetzung gemäß einem der Ansprüche 1 und 2, wobei die mehrphasige Farbzusammensetzung nach Auftragung einen Glanzwert von unter 60 Glanzeinheiten gemessen nach DIN EN ISO 2813 unter einem Messwinkel von 60° aufweist.

4. Mehrphasige Farbzusammensetzung gemäß einem der vorangegangenen Ansprüche, wobei die Phase A), bezogen auf das Gesamtgewicht der Phase A), enthält:
(a) 50-89 Gew.%, vorzugsweise 55-89 Gew.%, stärker bevorzugt 60-88,5 Gew.% Wasser,
(b) 0,5-8 Gew.%, vorzugsweise 1-6 Gew.%, stärker bevorzugt 1,5-4 Gew.% eines oder mehrerer Schichtsilikate, und
(c) 10 bis 30 Gew.%, vorzugsweise 15 bis 25 Gew.% Bindemittel.

5. Mehrphasige Farbzusammensetzung gemäß einem der vorangegangenen Ansprüche, wobei die Phase A) frei von Pigmenten und Füllstoffen ist.

6. Mehrphasige Farbzusammensetzung gemäß einem der vorangegangenen Ansprüche, wobei die Phase B), bezogen auf das Gesamtgewicht der Phase B), enthält:
(a) 40-80 Gew.%, vorzugsweise 50-77 Gew.%, stärker bevorzugt 60-74 Gew.% Wasser,
(b) 10-25 Gew.%, vorzugsweise 11-20 Gew.%, stärker bevorzugt 12-18 Gew.% Bindemittel, und
(c) 10 bis 30 Gew.%, vorzugsweise 12 bis 25 Gew.%, stärker bevorzugt 14-20 Gew.% Pigmente und/oder Füllstoffe.

7. Mehrphasige Farbzusammensetzung gemäß einem der vorangegangenen Ansprüche, wobei in Phase A) das Gewichtsverhältnis von Bindemittel zu Schichtsilikaten 4 bis 20, vorzugsweise 7 bis 16 beträgt, und/oder in Phase B) das Gewichtsverhältnis von Pigmenten und Füllstoffen zu Bindemittel 0,5 bis 3, vorzugsweise 0,8-2,5, stärker bevorzugt 1-2 beträgt.

8. Mehrphasige Farbzusammensetzung gemäß einem der vorangegangenen Ansprüche, wobei das Gewichtsverhältnis des gegebenenfalls in Phase B) enthaltenden Schichtsilikats zu dem in Phase A) enthaltenden Schichtsilikat zwischen 0 und 0,04, vorzugsweise zwischen 0 und 0,02 liegt.

9. Mehrphasige Farbzusammensetzung gemäß einem der vorangegangenen Ansprüche, wobei das Gewichtsverhältnis zwischen Phase A) und Phase B) 90:10 bis 60:40 beträgt.

10. Mehrphasige Farbzusammensetzung gemäß einem der vorangegangenen Ansprüche, wobei die dispergierte Phase B) in Form von Tropfen einer mittleren Größe von 50 bis 5000 µm vorliegt.

11. Mehrphasige Farbzusammensetzung gemäß einem der vorangegangenen Ansprüche, wobei die dispergierte Phase B) aus mehreren verschiedenen dispergierten Phasen besteht, die sich hinsichtlich der mittleren Größe der Tropfen, dem mittleren Seitenverhältnis der Tropfen und/oder der Farbe unterscheiden, und wobei die mehrphasige Farbzusammensetzung vorzugsweise mindestens zwei dispergierte Phasen B1) und B2) enthält, und das mittlere Seitenverhältnis der Tropfen der Phase B1) um mehr als 50% vom mittleren Seitenverhältnis der Tropfen der Phase B2) abweicht, und/oder die mittlere Größe der Tropfen der Phase B1) um mehr als 50% von der mittleren Größe der Tropfen der Phase B2) abweichen.

12. Mehrphasige Zusammensetzung gemäß einem der vorangegangenen Ansprüche, erhältlich durch
(i) Herstellen von Phase A'), enthaltend:
Wasser und
ein oder mehrere Schichtsilikate;
(ii) Herstellen von Phase B), enthaltend:
Wasser,
Bindemittel, und
Füllstoffe und/oder Pigmente;
(iii) Vereinigen von mindestens einem Teils der Phase A'), erhalten in Schritt i), und der Phase B), erhalten in Schritt ii), wobei eine mehrphasige Zusammensetzung mit Phase A') als Matrix und Phase B) als dispergierter Phase erhalten wird, und weiteres Mischen der erhaltenen mehrphasigen Zusammensetzung bis die Tropfen der dispergierten Phase B) eine gewünschte Größe aufweisen, beispielsweise 50 bis 5000 µm;
(iv) Zugeben von Bindemitteln und, gegebenenfalls, weiteren Komponenten, z.B. Additiven, zu der mehrphasigen Zusammensetzung, erhalten in Schritt iii).

13. Verfahren zur Herstellung einer Farbzusammensetzung, enthaltend die folgenden Schritte:
i) Herstellen von Phase A'), enthaltend:
Wasser und
ein oder mehrere Schichtsilikate;
ii) Herstellen von Phase B), enthaltend:
Wasser,
Bindemittel, und
Füllstoffe und/oder Pigmente;
iii) Vereinigen von mindestens einem Teils der Phase A'), erhalten in Schritt i), und der Phase B), erhalten in Schritt ii), wobei eine mehrphasige Zusammensetzung mit Phase A') als Matrix und Phase B) als dispergierter Phase erhalten wird, und weiteres Mischen der erhaltenen mehrphasigen Zusammensetzung bis die Tropfen der dispergierten Phase B) eine gewünschte Größe aufweisen, beispielsweise 50 bis 5000 µm;
iv) Zugabe von Bindemitteln und, gegebenenfalls, weiteren Komponenten, z.B. Additiven, zu der mehrphasigen Zusammensetzung, erhalten in Schritt iii);
wobei die mehrphasige Farbzusammensetzung eine Pigment-Volumen-Konzentration von 1% bis 25% aufweist.

14. Verfahren gemäß Anspruch 13, wobei vor dem Ausführen von Schritt iv) die Schritte ii) und iii) mindestens einmal wiederholt werden, wobei jeweils eine weitere mehrphasige Zusammensetzung erhalten wird, die jeweils eine weitere dispergierte Phase enthält, und wobei nachfolgend die jeweiligen mehrphasigen Zusammensetzungen vereinigt werden.

15. Verwendung der mehrphasigen Farbzusammensetzung gemäß einem der vorangegangenen Ansprüche 1 bis 12 als reflektionsarme Beschichtung.

16. Verwendung gemäß Anspruch 15, wobei die Farbzusammensetzung als reflektionsarme Beschichtung an Außenflächen verwendet wird.

17. Verwendung gemäß Anspruch 15 oder 16, wobei die Farbzusammensetzung als reflektionsarme Beschichtung für verkehrsnahe Flächen verwendet wird.

## Geänderte Patentansprüche

### Geänderte Patentansprüche gemäss Regel 137(2) EPÜ.

1. Mehrphasige Farbzusammensetzung, enthaltend
a) eine Phase A) als Matrixphase, enthaltend
Wasser,
ein oder mehrere Schichtsilikate und
Bindemittel; und
b) mindestens eine Phase B), welche in Phase A) dispergiert ist, enthaltend
Wasser,
Bindemittel und
Füllstoffe und/oder Pigmente,
wobei die mehrphasige Farbzusammensetzung eine Pigment-Volumen-Konzentration von 1% bis 25% aufweist.

2. Mehrphasige Farbzusammensetzung gemäß Anspruch 1, wobei das Gewichtsverhältnis, jeweils bezogen auf die Festsubstanz der mehrphasigen Farbzusammensetzung, zwischen der Gesamtmenge an Schichtsilikat und der Gesamtmenge an Füllstoffen und Pigmenten mindestens 0,3, vorzugsweise mindestens 0,35, stärker bevorzugt mindestens 0,40 beträgt.

3. Mehrphasige Farbzusammensetzung gemäß einem der Ansprüche 1 und 2, wobei die mehrphasige Farbzusammensetzung nach Auftragung einen Glanzwert von unter 60 Glanzeinheiten gemessen nach DIN EN ISO 2813 unter einem Messwinkel von 60° aufweist.

4. Mehrphasige Farbzusammensetzung gemäß einem der vorangegangenen Ansprüche, wobei die Phase A), bezogen auf das Gesamtgewicht der Phase A), enthält:
(a) 50-89 Gew.%, vorzugsweise 55-89 Gew.%, stärker bevorzugt 60-88,5 Gew.% Wasser,
(b) 0,5-8 Gew.%, vorzugsweise 1-6 Gew.%, stärker bevorzugt 1,5-4 Gew.% eines oder mehrerer Schichtsilikate, und
(c) 10 bis 30 Gew.%, vorzugsweise 15 bis 25 Gew.% Bindemittel.

5. Mehrphasige Farbzusammensetzung gemäß einem der vorangegangenen Ansprüche, wobei die Phase A) frei von Pigmenten und Füllstoffen ist.

6. Mehrphasige Farbzusammensetzung gemäß einem der vorangegangenen Ansprüche, wobei die Phase B), bezogen auf das Gesamtgewicht der Phase B), enthält:
(a) 40-80 Gew.%, vorzugsweise 50-77 Gew.%, stärker bevorzugt 60-74 Gew.% Wasser,
(b) 10-25 Gew.%, vorzugsweise 11-20 Gew.%, stärker bevorzugt 12-18 Gew.% Bindemittel, und
(c) 10 bis 30 Gew.%, vorzugsweise 12 bis 25 Gew.%, stärker bevorzugt 14-20 Gew.% Pigmente und/oder Füllstoffe.

7. Mehrphasige Farbzusammensetzung gemäß einem der vorangegangenen Ansprüche, wobei in Phase A) das Gewichtsverhältnis von Bindemittel zu Schichtsilikaten 4 bis 20, vorzugsweise 7 bis 16 beträgt, und/oder in Phase B) das Gewichtsverhältnis von Pigmenten und Füllstoffen zu Bindemittel 0,5 bis 3, vorzugsweise 0,8-2,5, stärker bevorzugt 1-2 beträgt.

8. Mehrphasige Farbzusammensetzung gemäß einem der vorangegangenen Ansprüche, wobei das Gewichtsverhältnis des gegebenenfalls in Phase B) enthaltenden Schichtsilikats zu dem in Phase A) enthaltenden Schichtsilikat zwischen 0 und 0,04, vorzugsweise zwischen 0 und 0,02 liegt.

9. Mehrphasige Farbzusammensetzung gemäß einem der vorangegangenen Ansprüche, wobei das Gewichtsverhältnis zwischen Phase A) und Phase B) 90:10 bis 60:40 beträgt.

10. Mehrphasige Farbzusammensetzung gemäß einem der vorangegangenen Ansprüche, wobei die dispergierte Phase B) in Form von Tropfen einer mittleren Größe von 50 bis 5000 µm vorliegt.

11. Mehrphasige Farbzusammensetzung gemäß einem der vorangegangenen Ansprüche, wobei die dispergierte Phase B) aus mehreren verschiedenen dispergierten Phasen besteht, die sich hinsichtlich der mittleren Größe der Tropfen, dem mittleren Seitenverhältnis der Tropfen und/oder der Farbe unterscheiden, und wobei die mehrphasige Farbzusammensetzung vorzugsweise mindestens zwei dispergierte Phasen B1) und B2) enthält, und das mittlere Seitenverhältnis der Tropfen der Phase B1) um mehr als 50% vom mittleren Seitenverhältnis der Tropfen der Phase B2) abweicht, und/oder die mittlere Größe der Tropfen der Phase B1) um mehr als 50% von der mittleren Größe der Tropfen der Phase B2) abweichen.

12. Mehrphasige Zusammensetzung gemäß einem der vorangegangenen Ansprüche, erhältlich durch
(i) Herstellen von Phase A'), enthaltend:
Wasser und
ein oder mehrere Schichtsilikate;
(ii) Herstellen von Phase B), enthaltend:
Wasser,
Bindemittel, und
Füllstoffe und/oder Pigmente;
(iii) Vereinigen von mindestens einem Teils der Phase A'), erhalten in Schritt i), und der Phase B), erhalten in Schritt ii), wobei eine mehrphasige Zusammensetzung mit Phase A') als Matrix und Phase B) als dispergierter Phase erhalten wird, und weiteres Mischen der erhaltenen mehrphasigen Zusammensetzung bis die Tropfen der dispergierten Phase B) eine gewünschte Größe aufweisen, beispielsweise 50 bis 5000 µm;
(iv) Zugeben von Bindemitteln und, gegebenenfalls, weiteren Komponenten, z.B. Additiven, zu der mehrphasigen Zusammensetzung, erhalten in Schritt iii).

13. Verfahren zur Herstellung einer Farbzusammensetzung, enthaltend die folgenden Schritte:
i) Herstellen von Phase A'), enthaltend:
Wasser und
ein oder mehrere Schichtsilikate;
ii) Herstellen von Phase B), enthaltend:
Wasser,
Bindemittel, und
Füllstoffe und/oder Pigmente;
iii) Vereinigen von mindestens einem Teils der Phase A'), erhalten in Schritt i), und der Phase B), erhalten in Schritt ii), wobei eine mehrphasige Zusammensetzung mit Phase A') als Matrix und Phase B) als dispergierter Phase erhalten wird, und weiteres Mischen der erhaltenen mehrphasigen Zusammensetzung bis die Tropfen der dispergierten Phase B) eine gewünschte Größe aufweisen, beispielsweise 50 bis 5000 µm;
iv) Zugabe von Bindemitteln und, gegebenenfalls, weiteren Komponenten, z.B. Additiven, zu der mehrphasigen Zusammensetzung, erhalten in Schritt iii);
wobei die mehrphasige Farbzusammensetzung eine Pigment-Volumen-Konzentration von 1% bis 25% aufweist.

14. Verfahren gemäß Anspruch 13, wobei vor dem Ausführen von Schritt iv) die Schritte ii) und iii) mindestens einmal wiederholt werden, wobei jeweils eine weitere mehrphasige Zusammensetzung erhalten wird, die jeweils eine weitere dispergierte Phase enthält, und wobei nachfolgend die jeweiligen mehrphasigen Zusammensetzungen vereinigt werden.

15. Verwendung der mehrphasigen Farbzusammensetzung gemäß einem der vorangegangenen Ansprüche 1 bis 12 als reflektionsarme Beschichtung, mit einem Glanzwert von unter 60, gemessen nach DIN EN ISO 2813:1999 unter einem Messwinkel von 60°.

16. Verwendung gemäß Anspruch 15, wobei die Farbzusammensetzung als Beschichtung an Außenflächen verwendet wird.

17. Verwendung gemäß Anspruch 15 oder 16, wobei die Farbzusammensetzung als Beschichtung für verkehrsnahe Flächen verwendet wird.
